# EUROPEAN PATENT SPECIFICATION

(11) **EP 1 414 906 B1**
(45) Date of publication and mention of the grant of the patent: **21.03.2007**
(21) Application number: 02752577.3
(22) Date of filing: 26.07.2002
(51) Int. Cl.: C08L 79/08, C08K 7/06

(54) **IMPROVED POLYAMIDE-IMIDE MOLDING RESINS AND METHOD FOR THEIR PREPRATION**
VERBESSERTE POLYAMIDIMID-FORMMASSEN UND VERFAHREN ZU IHRER HERSTELLUNG
RESINES POLYIMIDE DE MOULAGE AMELIOREES ET LEUR PROCEDE DE PREPARATION

(30) Priority: 26.07.2001 US 308048 P; 28.02.2002 US 359901 P
(43) Date of publication of application: 06.05.2004
(73) Proprietor: Solvay Advanced Polymers, L.L.C., Alpharetta, GA 30005-3914 (US)
(72) Inventor: UNDERWOOD, Geoffrey, Atlanta, GE 30345 (US)
(74) Representative: Jacques, Philippe
(86) International application number: PCT/US2002/023653
(87) International publication number: WO 2003/010237

(56) References cited:
- EP-A- 0 417 897
- EP-A- 0 978 529

## Description

This invention is directed to moldable compositions having good friction and wear properties. More particularly, the invention is directed to moldable resin formulations comprising polyamide-imide resins, fluoropolymers and highly graphitic, pitch-based carbon fiber having improved mechanical properties together with good surface lubricity for use in applications requiring excellent wear resistance under severe conditions.

### BACKGROUND OF THE INVENTION

Many applications in the automotive and industrial markets require materials having the strength and wear resistance found in lubricated metals. Internally lubricated polymers are replacing metals in these applications because of their ease of fabrication, higher performance, lower or little dependence on external lubrication, and lower overall cost.

Considerable effort has been directed toward developing improved materials suitable for use in these applications. Compositions comprising high performance resins such as polyimides and aromatic polyamides are widely used commercially where strength, rigidity and high upper-use temperatures are required. Fluoropolymers have long been employed as surface lubricants to improve lubricity in a wide variety of wear applications, and have been compounded with high performance resins to improve friction and wear characteristics of molded parts and the like. Compositions comprising polyimides with as much as 60 wt.% of a fluoropolymer such as polytetrafluoroethylene exhibit substantially improved wear properties. However, the strength properties of the polyimide resin are substantially reduced by the addition of the fluoropolymer, particularly at high loading levels.

Polyimides have been compounded with a variety of lubricants including graphite, molybdenum sulfide, bismuth nitride and the like to improve wear resistance under severe conditions. Compositions comprising polyimides and graphite, together with fluoropolymers, have found wide acceptance for use in a variety of applications requiring good friction and wear properties. However, the strength properties of these materials are also reduced when compounded with these additives at levels needed to attain the desired friction and wear characteristics.

Compositions comprising polyimide and mica are also known, and are disclosed to have good wear resistance and friction properties, particularly under severe conditions and at high surface speeds. The further addition of small amounts of carbon fiber and graphite is said to improve wear resistance and dimensional stability of these formulations.

Generally, materials employed in friction and wear applications, and particularly those comprising very high temperature resins such as polyimides are difficult to mold.

The development of materials formulated to have good wear properties over a wide range of operating conditions while retaining good mechanical strength and rigidity that may be fabricated by injection molding would find wide acceptance in the art.

### SUMMARY OF THE INVENTION

This invention is directed to moldable compositions comprising polyamide-imide resins, fluoropolymers and carbon fiber and to molded articles comprising such compositions. More particularly, the compositions of this invention are moldable resin formulations comprising polyamide-imide resins, fluoropolymers and highly graphitic, pitch-based carbon fiber. The invented compositions have good strength properties and exhibit good surface lubricity and excellent wear properties.

The addition of highly graphitic, pitch-based carbon fiber to injection molding resin formulations comprising polyamide-imide and a fluoropolymer substantially improves the wear performance. Hence, the invention may be further characterized as directed to a method for improving the friction and wear performance of such compositions.

### DETAILED DESCRIPTION OF THE INVENTION

The invented formulations will comprise a polyamide-imide and a fluoropolymer as the resin components, together with highly graphitic, pitch-based carbon fiber.

Polyamide-amic acid resins suitable for use in the practice of this invention are well known in the art and are generally described and disclosed therein, for example, in U.S. Patents 5,230,956; 4,224,214; and 4,136,085, which are hereby incorporated by reference in their entireties. The polyamide-amic acid resins may be further described as a polymer material comprising a mixture of amide-amic acid units which may be represented by the following structural formula: 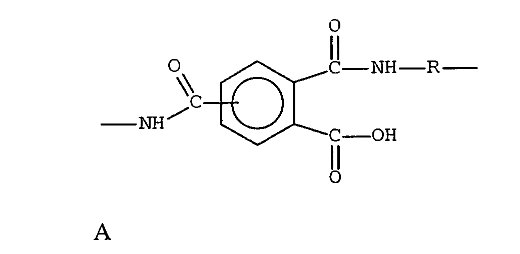 wherein the attachment of the two amide groups to the aromatic ring as shown will be understood to represent the 1,3 and the 1,4 polyamide-amic acid configurations, together with amide-imide units which may be represented by the following structural formula: 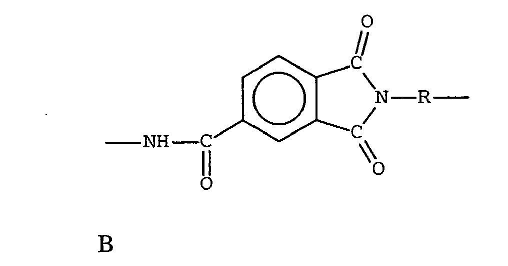 wherein R in the structure above is the moiety derived from the aromatic diamine component. R may be further described as a substituted or unsubstituted divalent arylene moiety selected from the group consisting of: 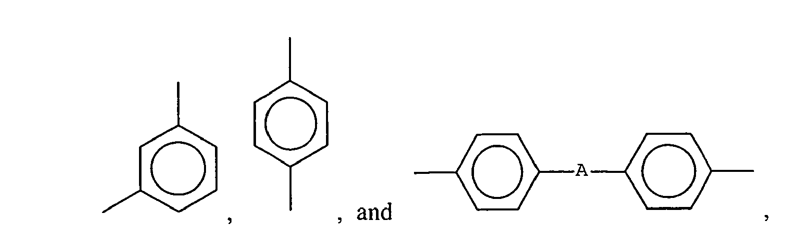 wherein A is a divalent radical, selected, for example, from the group consisting of - SO₂-, -CO-, -C(CH₃)₂-, -O-, -S- and a direct chemical bond. Aromatic diamines having other linking groups are also known in the art and used as monomers in the production of polyamide-imide resins, and most will be found suitable for use according to the practice of this invention.

By way of illustration, polyamide-amic acid according to the invention wherein the aromatic diamine component is 4,4'-methylenedianiline (MDA), units A and B may be more particularly represented by the structural formulae 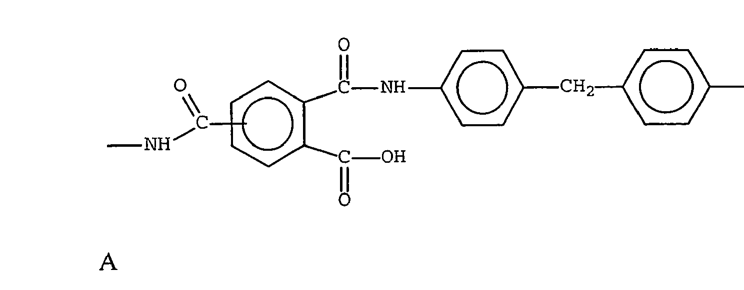 and

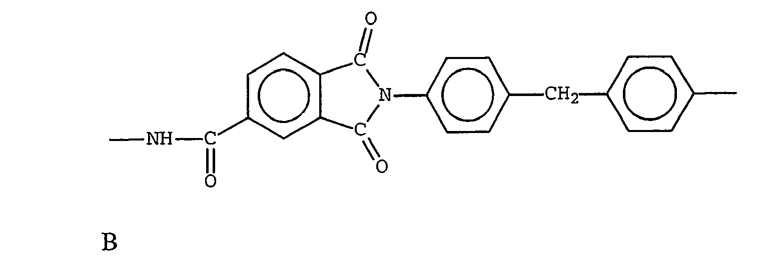

The number average molecular weight of the polyamide-amic acid will generally be greater than about 1000 to about 20,000 g/mol. In certain embodiments of the instant invention, the polyamide-amic acid has a number average molecular weight of from about 4,000 to about 10,000 g/mol.

Generally described, polyamide-amic acids are readily prepared by the polycondensation reaction of at least one suitable aromatic polycarboxylic acid or reactive derivative thereof and one or more aromatic diamines. The polymerization is conveniently carried out under substantially anhydrous conditions in a polar solvent and at a temperature below about 150°C, employing substantially stoichiometric quantities of the reactive carboxylic acid component and amine component. A slight stoichiometric excess, typically from about 0.5 to about 5 mole %, of either monomer component, preferably the carboxylic acid anhydride component, may be employed if desired in order to control molecular weight; alternatively a monofunctional reactant may be employed as an endcapping agent for this purpose, and to improve stability.

Polyamide-amic acids formed from reactive trimellitic acid compounds or similar tricarboxylic acid compounds in theory will comprise one amic acid grouping per tricarboxylic acid repeat unit. Thermally imidizing or curing the resin cyclizes the amic acid groups to form imide links, thereby reducing the level of amic acid functionality and thus lowering the acid number.

More particularly described, the polyamide-amic acid resins may be prepared by the reaction of trimellitic acid or a derivative thereof such as, for example, a lower alkyl ester of trimellitic acid anhydride or a trimellitic acid halide, preferably the acid chloride of trimellitic anhydride, i.e. trimellitic anhydride chloride (TMAC), with at least one aromatic diamine such as, for example, p-phenylenediamine, m-phenylenediamine (mPDA), oxybis(aniline) (ODA), benzidene, 1,5-diaminonaphthalene, oxybis(2-methylaniline) 2,2-bis[4-(p-aminophenoxy)phenyl] propane, bis[4-(p-aminophenoxy)] benzene, bis[4-(3-aminophenoxy)] benzene and 4,4'-methylenedianiline. Examples of other useful aromatic primary diamines are set out in U.S. Pat. No. 3,494,890 (1970) and U.S. Pat. No. 4,016,140 (1977), both incorporated herein by reference. In certain embodiments of the instant invention a mixture of aromatic diamines is used. One such particularly effective mixture is a 70:30 mole ratio mixture of ODA:mPDA.

Aromatic diamines may also be polymerized with tetracarboxylic acid dianhydrides such as benzophenone tetracarboxylic acid dianhydride (BTDA), pyromellitic acid dianhydride (PMDA) or the like according to the art to provide polyamic acids. On curing, these polyamic acids form polyimide resin coatings and films. These and similar aromatic dianhydrides disclosed in the art for the preparation of polyimides are also known and described in the art for use in combination with TMAC to provide polyamide-imide copolymer resins. See, for example, US 4,879,345. Polyamide-amic acid resins wherein up to 25 mole% of the TMAC monomer is replaced by one or more such additional dianhydride monomers may also be found useful in the practice of this invention. Alternatively, useful blends comprising the preferred polyamide-amic acid resins and up to 25 wt.% of a prior art polyamic acid resin may also be found useful.

The reaction of a trimellitic acid halide and an aromatic diamine, for example, TMAC and MDA, to form the polyamide-amic acid may be conveniently carried out in a suitable solvent such as N-methylpyrrolidone, (NMP); other polar solvents such as N,N-dimethylformamide (DMF), methyl ethyl ketone (MEK) and N,N-dimethylacetamide (DMAC) and hexamethylphosphoramide (HMPA) can be used.

The mole ratio of MDA to TMAC will preferably lie in the range of from about 0.9:1 to about 1.1:1. Generally the polymerization will be carried out by first combining and dissolving MDA in the solvent in the reaction vessel and then adding TMAC monomer, with stirring. The reaction, which is exothermic, may be conveniently controlled by regulating the rate of addition of the reactants to the reaction vessel and by means of external cooling. The reaction mass will be maintained at a temperature below 150 °C to avoid curing, and preferably in a range of from about 20 °C to about 50 °C, more preferably from about 27 °C (80 °F) to about 50 °C (120 °F) for a period of from about 1 to about 10 hr. to complete the polymerization. The reaction time is not critical, and may vary from about 1 to about 24 hr. depending upon reaction temperature, with about 2 to about 4 hr. at a temperature in the range of from 30 °C to about 50 °C being preferred.

As noted, polymerization to form the polyamide-amic acid will be carried out under substantially anhydrous conditions to avoid hydrolysis of the precursors as well as hydrolysis of the polyamide-amic acid. It is well understood in the art that polyamic acids are sensitive to water, particularly when maintained at a neutral or acid pH. The amide function of the amic acid grouping becomes hydrolyzed under these conditions, breaking the polymer chain and causing a loss in molecular weight. It is believed that the aromatic dicarboxylic acid functionality that results from the hydrolysis may thermally cyclize to form an anhydride functionality that is reactive toward amine end-groups. Heating and curing thus may reform the polymer chain, thereby "healing" the polymer. As will be apparent from an examination of structural formula A, polyamide-amic acids including those preferred for use in the practice of this invention contain an amide function in addition to the amic acid grouping. The second amide functionality readily hydrolyzes under acid conditions in the presence of water, forming an aromatic carboxylic acid group that is substantially unreactive. Loss in molecular weight caused by this hydrolysis step, thought to be irreversible, may result in a complete depolymerization of the polyamide-amic acid. It will thus be understood that it is highly desirable to minimize contact with water under conditions that will hydrolyze the polyamide-amic acid.

In polyamide-imide resins suitable for molding, typically about 95% of the amic acid groups are imidized. Suitable polyamide-imide molding resins are readily available commercially in a variety of grades, and particularly from Solvay Advanced Polymers as Torlon^{®} resins. In certain embodiments of the instant invention, Torlon^{®} 4000T resin is particularly well-suited.

Fluoropolymers suitable for use in the practice of this invention may be any of the fluoropolymers known in the art for use as lubricants, and preferably will be a polytetrafluoroethylene (PTFE). PTFE resins are widely known for chemical resistance and for lubricity and toughness, and PTFE powders have long been used to improve the lubricity of a wide variety of materials. PTFE spheres or beads are incorporated in molding resin formulations to act as an internal lubricant and to create a smooth, slippery surface with enhanced friction and wear properties. Suitable fluoropolymer resins are readily available commercially from a variety of sources, including Zonyl^{®} fluoroadditives from DuPont Company, Daikin-Polyflon^{™} PTFE from Daikin America Inc, Polymist^{®} PTFE from Ausimont, and Polylube PA 5956 from Dyneon.

Generally the invented formulations will comprise polyamide-imide (PAI) and PTFE in weight ratios of PAI:PTFE of from about 80:20 to about 97.5:2.5. In certain embodiments of the invention, the weight ratios of PAI:PTFE are from about 85:15 to about 95:5. In other embodiments, the weight ratios of PAI:PTFE are from about 90:10 to about 95:5.

Compositions with much higher levels of PTFE have been disclosed in the art to have good wear properties. However, even moderate amounts of PTFE in high performance resin formulations such as in polyamide-imide resins adversely affects strength properties and lowers rigidity. For compositions containing greater than about 10 wt% PTFE the reduction in these mechanical properties are significant, severely limiting their utility in applications where toughness and rigidity are important considerations. Hence such compositions will not be preferred for such applications.

Carbon fibers suitable for use in the practice of this invention include highly graphitized carbon fiber having a high thermal conductivity and a low or negative coefficient of thermal expansion produced from pitch. As used herein, the term "carbon fibers" is intended to include graphitized, partially graphitized and ungraphitized carbon reinforcing fibers or a mixture thereof. The preferred carbon fibers will be pitch-based carbon fiber and generally will have a thermal conductivity of about 140 W/mK or greater. Preferably, the carbon fiber will have a thermal conductivity greater than about 300 W/mK. In certain embodiments of the instant invention, the carbon fiber will have a thermal conductivity greater than about 600 W/mK. Other embodiments will use carbon fiber with a thermal conductivity greater than 900 W/mK, and greater than 1000 W/mK. Fiber with even greater thermal conductivity, from 1300 W/mK up to the thermal conductivity of single crystal graphite, 1800 W/mK and higher, will also be suitable.

Graphitized pitch-based carbon fibers are readily available from commercial sources containing at least about 50 weight percent graphitic carbon, greater than about 75 weight percent graphitic carbon, and up to substantially 100% graphitic carbon. Highly graphitic carbon fiber particularly suitable for use in the practice of this invention may be further characterized as highly conductive, and such fiber is generally used having a modulus of about 5.51 10² GPa to about 8.27 10² GPa (of about 80 to about 120 million pounds per square inch, i.e., million Ibs/in² (MSI)). In certain embodiments the highly graphitic carbon fiber has a modulus of about 5.86 10² GPa to about 8.27 10² GPa (of about 85 to about 120 MSI), and in other certain embodiments about 6.89 10² GPa to about 7.93 10² GPa (about 100 to about 115 MSI).

Pitch-based carbon fiber in a variety of strengths and conductivity is readily available from commercial sources. Fiber with thermal conductivity falling in the range of from 300 W/mK to greater than 1100 W/mK, a density of from 2.16 to above 2.2 g/cc and a very high tensile modulus, from 7.58 10² GPa (110x10⁶ psi) to greater than 8.27 10²GPa (120x10⁶ psi), is readily obtainable from commercial sources, including Thornel^{®} pitch-based carbon fiber from Cytec Carbon Fibers.

Carbon fiber may be employed as chopped carbon fiber or in a particulate form such as may be obtained by milling or comminuting the fiber. Comminuted graphitized carbon fiber suitable for use in the practice of the invention may be obtained from commercial sources including from Cytec Carbon Fibers as ThermalGraph^{®} DKD X and CKD X grades of pitch-based carbon fiber and Mitsubishi Carbon Fibers as Dialead carbon fibers.

Less graphitic and thereby lower conductivity pitch based fiber is also known in the art for use in reinforcement of high performance resins. However, such fiber materials generally are found to be detrimental to wear performance. In addition, PAN-based carbon fibers, which typically have a thermal conductivity in a range of from 10-20 W/mK, are also found ineffective as additives for improving wear. Such fiber will thus not be preferred.

Formulations according to the invention may further comprise any of the variety of solid lubricant additives disclosed in the art for further improving wear properties, particularly including graphite, mica and the like.

Graphite suitable for use in the formulations according to the invention may be spherical or flaky and, for good wear-resistance, will have a particle diameter of preferably 250 µm or less. Synthetic and natural graphite will generally be found useful, and are readily available from a variety of commercial sources. Although compositions comprising high levels of graphite, generally greater than about 30 wt%, are disclosed in the art for use in friction applications, the addition of graphitic carbon fiber according to the invention will significantly benefit the wear properties of formulations containing as little as 5 wt% graphite. Polyamide-imide formulations comprising PTFE and from about 5 to about 20 pbw graphite, per hundred parts of the combined polyamide-imide and PTFE resin components, or from about 10 to about 30 wt.% graphite based on total combined weight, will be found to have substantially improved wear characteristics over a wide range of conditions when further compounded with graphitic carbon fiber according to the invention.

The addition of an inorganic, low hardness, thermally stable, sheet silicate, such as muscovite mica is disclosed in the art to produce dramatic improvement in the wear and friction characteristics of polyimide resins at when run at high pressures and at high surface speeds (high PV). Including from about 5 to about 20 pbw of such sheet silica additives, per hundred parts of the combined polyamide-imide and PTFE resin components in the invented formulations may be found beneficial for providing materials intended to be used under such severe conditions.

The invention will be better understood by way of consideration of the following illustrative examples and comparison examples, which are provided by way of illustration and not in limitation thereof. In the examples, all parts and percentages are by weight unless otherwise specified.

### EXAMPLES

The materials employed in the following examples include:
PAI: Polyamide-imide resin, obtained as Torlon^{®} 4000T polyamide-imide resin from Solvay Advanced Polymers, L.L.C.
PTFE: Polytetrafluoroethylene powdered resin, obtained as Polylube PA 5956 PTFE micropowder from Dyneon.
Graphite: Obtained as #4735 grade graphite from Superior Graphite Company
CF1: comminuted high modulus graphitized, pitch-based carbon fiber having a thermal conductivity of 400-700 W/mK and an average length of 200 microns, obtained as ThermalGraph^{®} DKD X carbon fiber from Cytec Carbon Fibers.
CF2: chopped high modulus, graphitized, pitch-based carbon fiber having a thermal conductivity of 400-700 W/mK and an average length of 2.54 10⁻² m (1 inch), obtained as ThermalGraph^{®} CKD X carbon fiber from Cytec Carbon Fibers.
PAN CF: PAN-based carbon fiber, 1/8" chopped fiber obtained as Fortafil 124 carbon fiber from AKZO.
P-CF: milled, low modulus pitch-based carbon fiber having a thermal conductivity of 22 W/mK, obtained as VMX-24 carbon fiber from Cytec Carbon Fibers.
Mica: Muscovite Mica, nominal particle size 1-20 microns, obtained as BC1-20 grade mica from AZCO Mining Inc.

The formulations were pre-bledded, tumbled and fed directly to the extruder feed throat of a ZSK 57 screw compounding extruder at a 34.02 - 38.55 kg/hour (75-85 Ibs/hour) feed rate, using a 70 rpm screw speed, and a melt temperature range of 329-343° C (625-650° F). The extrudate was cut at the die face, using a rotating blade, into pellets for molding.

Thrust washers for friction testing were molded using a four cavity tool on an Engel 226796.18 kg (250 ton) 141.7.5-22.6.80 g (5-8 ounce) injection molding press. Test specimens for determining mechanical properties were similarly injection molded. The molded specimens and washers were thermally cured after molding.

Tribological tests were performed according to ASTM D3702. The thrust washers were broken in at 0.876 MPa - m/s (25,000 PV (ft-Ib/min-in²)) at 3657.60 m/s (200 ft/min) for 20 hours. They were then tested at PVs of 0.876 MPa-m/s, 1.752 MPa-m/s and 2.628 MPa-m/s (25,000, 50,000 and 75,000) all at 3657.60 m/s (200 ft/min). Example 11 and Comparative Example 13 were also tested at 914.40 m/s (50 ft /min) and 14630.40 m/s (800 ft/min). The time period for each was dependent on the wear properties of the material; successful materials were tested for 20 hours under each regime.

Coefficient of linear thermal expansion (CLTE) analysis was carried out using the molded and cured thrust washers. Expansion was measured perpendicular to the plane of the disc from room temperature to 255 °C (491°F) at a ramp rate of 5 °C/min.

Thermal conductivity measurements were carried out using thrust washers ground to a flat 1 1/8" diameter disk. Testing was done at room temperature according to ASTM C177, using the guarded hot plate method.

Mechanical properties were determined according to standard ASTM methods. The compositions prepared and the results of the testing are summarized in the following tables.

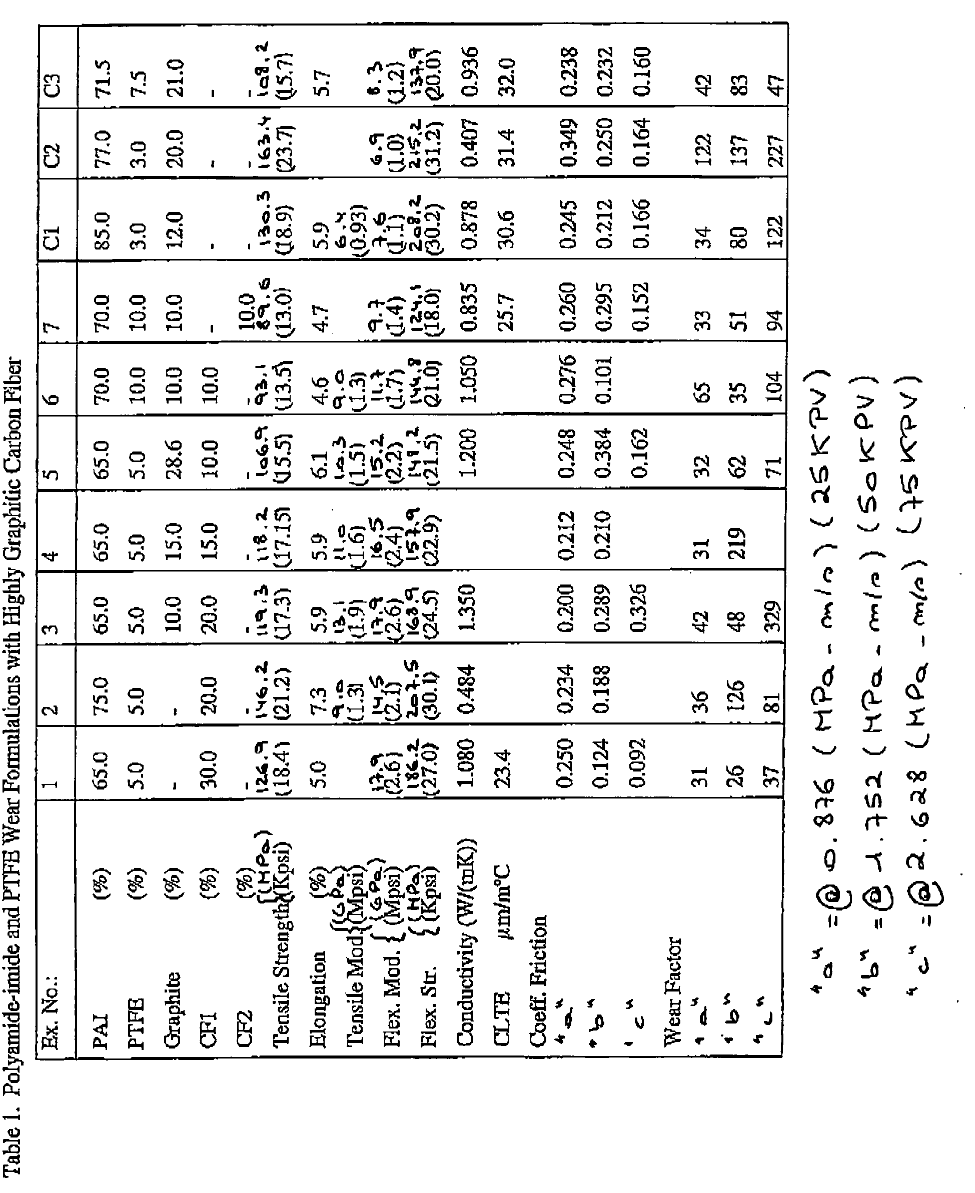

Wear formulations containing a polyamide-imide, PTFE and graphite will be seen to have good surface lubricity and good wear characteristics. However, adding sufficient PTFE to provide good wear properties significantly reduces strength properties and rigidity. See Comparison Examples C1-C3. Replacing the graphite component with a highly graphitic, pitch-based carbon fiber as in Examples 1 and 2 provides compositions having excellent wear properties and good lubricity as reflected in the coefficient of friction over a wide range of pressures and speeds (PV). Alternatively, adding highly graphitic, pitch-based carbon fiber to the graphite-containing wear formulations as in Examples 2-7 also provides significant improvement in wear properties over the control formulations of Comparison Examples C1-C3.

It will again be apparent that compositions with high levels of PTFE and graphite display a significant reduction in strength properties and rigidity. Compare the mechanical properties of Examples 5-7 with those of Examples 1-4.

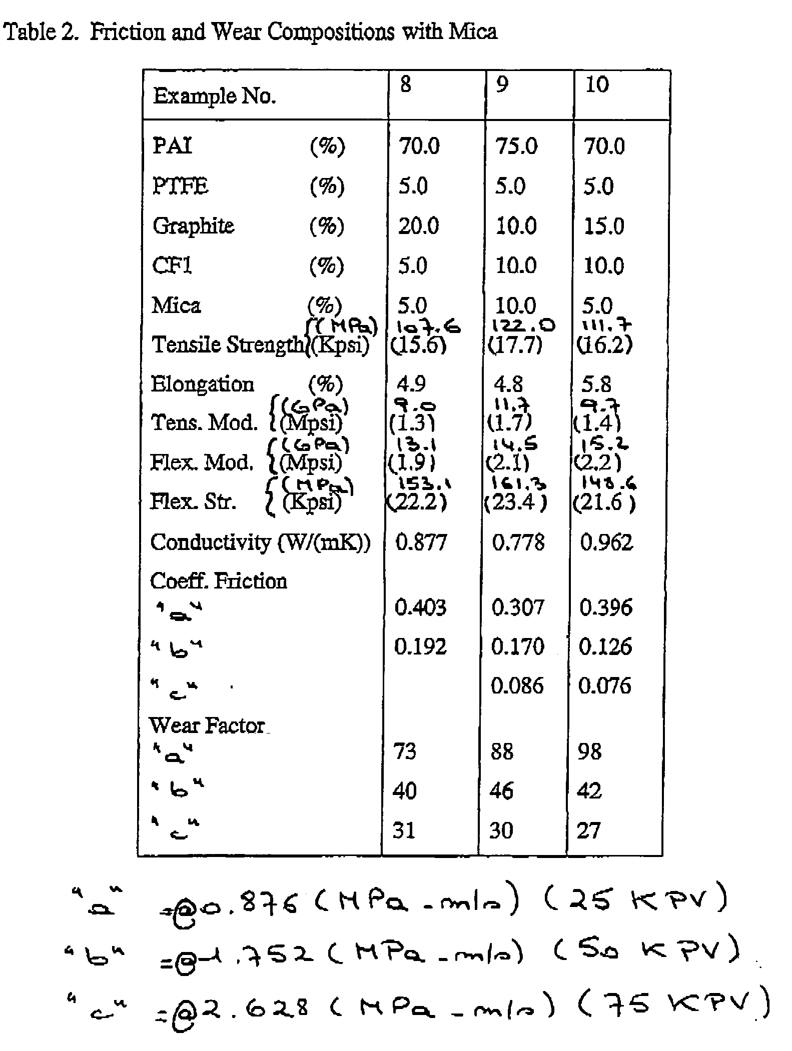

The further addition of mica to friction and wear formulations will be seen to improve wear factor and surface lubricity as reflected in the coefficient of friction for these wear formulations. However, the low speed, low pressure wear friction and wear properties are adversely affected.

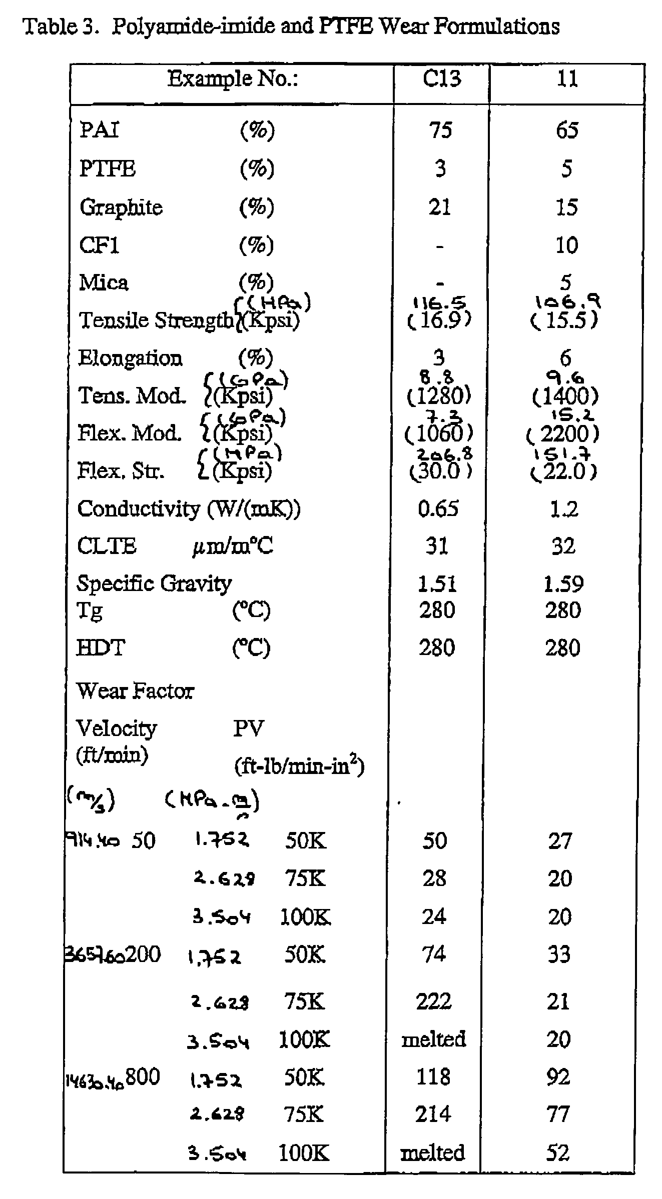

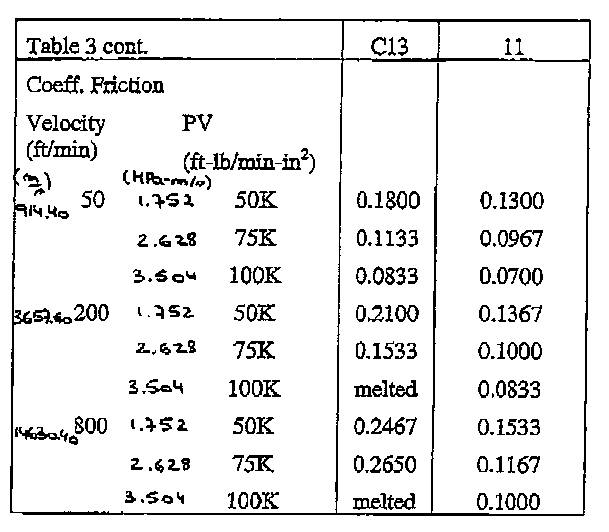

Comparative Example C13 and Example 11 correspond to Examples PAI-I and PAI-2 respectively, in *Wear Performance of Ultra-Performance Engineering Polymers* by Underwood, the disclosure of which is incorporated herein by reference in its entirety. Comparative Example C13 and Example 11 also correspond to Torlon^{®} 4275 and Torlon^{®} 4435 resins from Solvay Advanced Polymers LL.C.

The addition of a highly graphitic, pitch-based carbon fiber, slight increase in PTFE content, an adjustment of graphite, and addition of mica to friction and wear formulation C13 is shown to improve wear resistance and surface lubricity as reflected in the low wear factor and low coefficient of friction values for the Example 11 formulation.

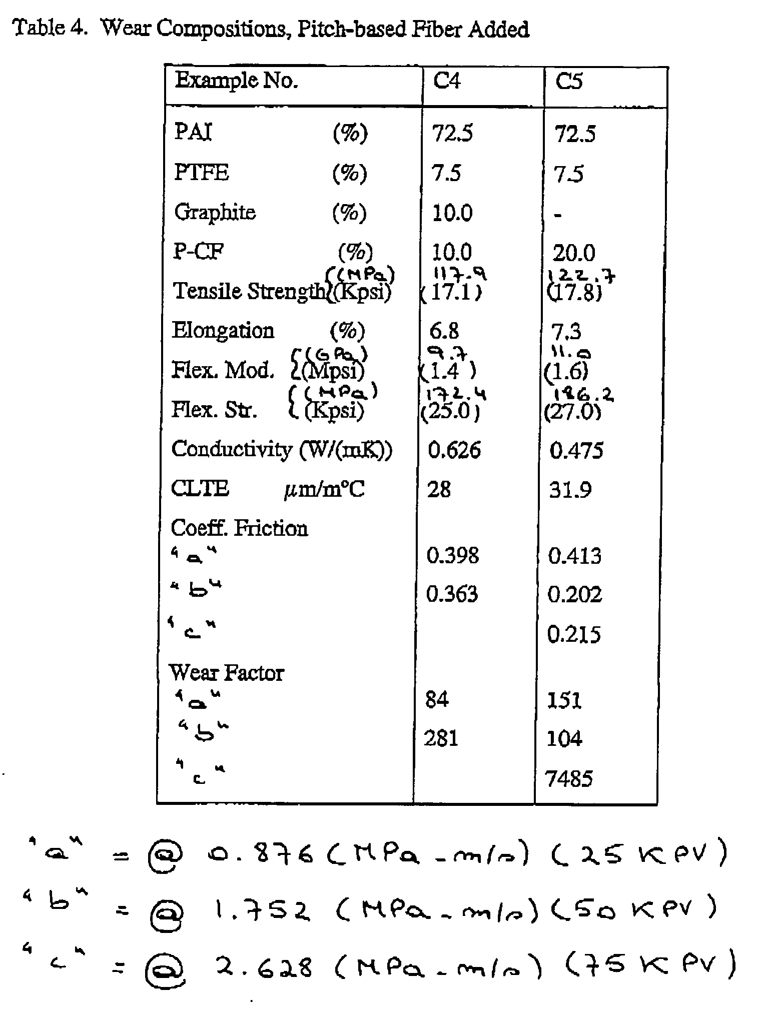

It will be apparent that adding low conductivity pitch fiber to a wear formulation containing graphite as in Comparison Example C4 or to a formulation without graphite as in Comparison Example C5, does not improve wear characteristics.

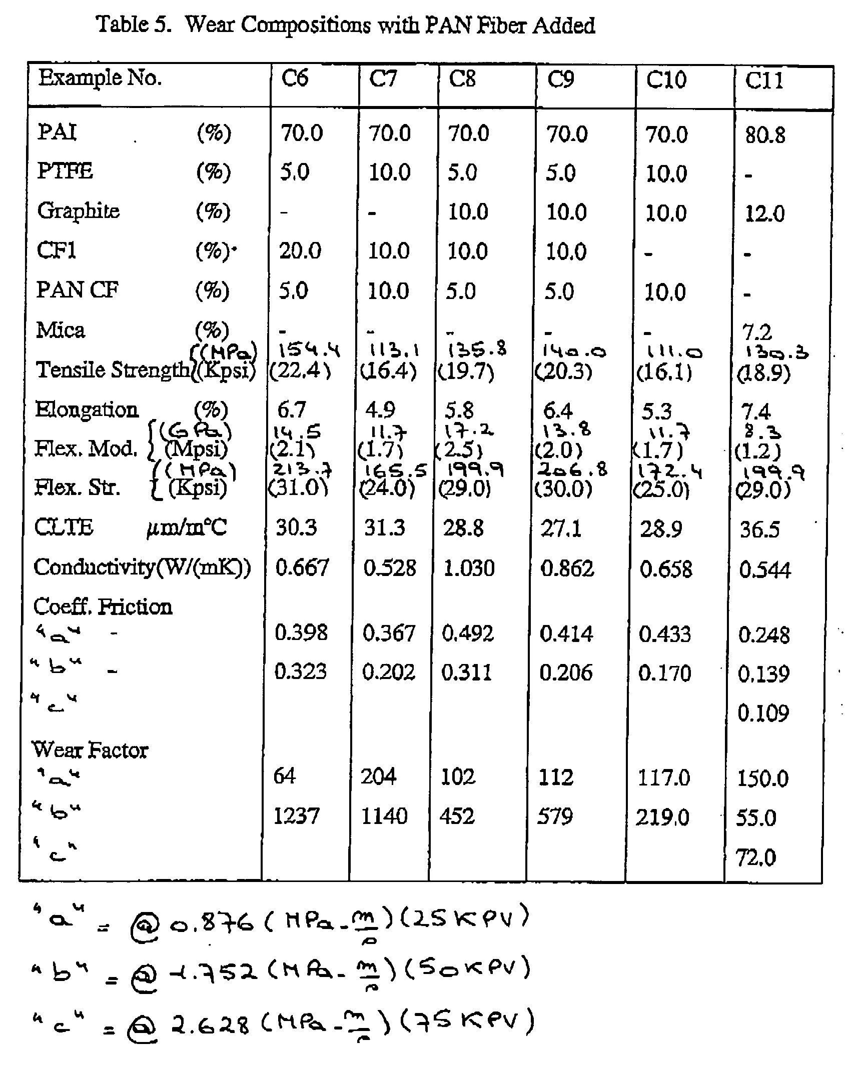

Substituting PAN fiber for highly graphitic fiber, as in Comparison Example C10, has a very detrimental affect on wear properties; also compare the properties for Examples 6 and 7, Table 1. Adding PAN-based carbon fiber to wear formulations containing graphite, as in Comparison Examples C8 and C9, and to formulations without graphite, as in Comparison Examples C6 and C7, also substantially worsens wear properties, even for compositions with an increased level of PTFE. Compositions comprising polyimide graphite and mica are described in the art for use at high PV conditions. As seen for Comparison Example C11, adding mica to polyamide-imide formulations does result in improved wear properties and lubricity at high loads and high speeds (high PV). However, the performance at low PV conditions is poor.

The invention will thus be seen to be directed to moldable compositions having good friction and wear properties comprising polyamide-imide resin, fluoropolymer and highly graphitic, pitch-based carbon fiber.

The compositions according to the invention may be more particularly described as comprising from about 57 wt.% to about 90 wt.% polyamide-imide resin based on the total weight of the composition, from about 3 wt. % to about 10 wt. % PTFE or other suitable fluoropolymer based on the total weight of the composition, and from greater than 5 wt.% to about 40 wt.% highly graphitic, pitch-based carbon fiber based on the total weight of the composition. In certain embodiments of the instant invention, the polyamide-imide resin is present in an amount of from about 60 wt.% to about 90 wt.%. Compositions comprising from 57 wt.% to about 85 wt.% polyamide-imide resin and from 3 wt.% to about 7.5 wt.% PTFE together with highly graphitic, pitch-based carbon fiber in amounts of from 10 wt.% to about 40 wt.%, and from 0 wt.% to about 30 wt.% graphite based on the total weight of the composition are particularly attractive molding resins having excellent friction and wear properties over a wide range of surface speeds and pressures. In certain embodiments of the instant invention, graphite is present in an amount of from 10 wt.% to about 35 wt.%. The frictional performance of the formulation at high pressures and velocities may be further improved by further addition of an inorganic, low hardness, thermally stable, sheet silicate such as muscovite mica.

The invention may be further characterized as directed to a method for improving the friction and wear performance of molding resin formulations comprising a polyamide-imide resin and a fluoropolymer such as PTFE comprising weight ratios of PAI:PTFE of from about 80:20 to about 97.5:2.5, in certain embodiments of the invention, the weight ratios of PAI:PTFE are from about 85:15 to about 95:5, and in other embodiments, the weight ratios of PAI:PTFE are from about 90:10 to about 95:5, optionally including graphite, and an amount of about 10 to about 40 wt.%, based on total combined weight of a highly graphitic, pitch-based carbon fiber.

## Claims

1. Composition comprising from 57 wt. % to 90 wt. % polyaznide-imide resin, from 3 to 10 wt. % fluoropolymer and from greater than 5 wt. % to 40 wt. % pitch-based carbon fiber containing at least 50 wt. % graphitic carbon.

2. Composition of Claim 1, **characterized in that** the pitch-based carbon fiber contains greater than 75 wt. % graphitic carbon.

3. Composition of Claim 1, **characterized in that** the pitch-based carbon fiber contains substantially 100 wt. % graphitic carbon.

4. Composition of Claim 1, **characterized in that** it comprises from 10 to 30 wt. % pitch-based carbon fiber containing at least 50 wt. % graphitic carbon and from 0 to 30 wt. % graphite.

5. Composition of Claim 1, **characterized in that** the pitch-based carbon fiber containing at least 50 wt. % graphitic carbon has a thermal conductivity of 400 to 700 W/mK and an average length of 200 microns.

6. Composition of Claim 1, **characterized in that** it comprises from 65 wt. % to 75 wt. % polyamide-imide resin, from 5 wt. % to 10 wt. % polytetrafluoroethylene, and from 10 wt. % to 30 wt. % of pitch-based carbon fiber containing at least 50 wt. % graphitic carbon.

7. Composition of Claim 1, **characterized in that** it further comprises an inorganic, low hardness, thermally stable, sheet silicate.

8. Composition of Claim 7, **characterized in that** the sheet silicate is mica.

9. Composition of Claim 7, **characterized in that** it comprises from 65 wt. % to 75 wt. % polyamide-imide resin, from 3 wt. % to 10 wt. % polytetrafluoroethylene, from 10 wt. % to 30 wt. % of pitch-based carbon fiber containing at least 50 wt. % graphitic carbon, and from 5 wt. % to 10 wt. % mica.

10. Composition of Claim 1, **characterized in that** said fluoropolymer is polytetrafluoroethylene.

11. Method for improving the wear characteristics of an injection molding composition **characterized in that** it comprises a polyamide-imide resin and polytetrafluoroethylene said method comprising melt compounding said composition with from greater than 5 wt. % to 40 wt % pitch-based carbon fiber containing at least 50 wt. % graphitic carbon.

12. Article formed by injection molding the composition of claim 1 or 7.

## Patentansprüche

1. Zusammensetzung, umfassend von 57 Gew.-% bis 90 Gew.-% Polyamid-Imid-Harz, von 3 bis 10 Gew.-% Fluorpolymer und von mehr als 5 Gew.-% bis 40 Gew.-% Pech-basierte Kohlenstofffaser, die mindestens 50 Gew.-% graphitischen Kohlenstoff enthält.

2. Zusammensetzung nach Anspruch 1, **dadurch gekennzeichnet, daß** die Pech-basierte Kohlenstofffaser mehr als 75 Gew.-% graphitischen Kohlenstoff enthält.

3. Zusammensetzung nach Anspruch 1, **dadurch gekennzeichnet, daß** die Pech-basierte Kohlenstofffaser im wesentlichen 100 Gew.-% graphitischen Kohlenstoff enthält.

4. Zusammensetzung nach Anspruch 1, **dadurch gekennzeichnet, daß** sie von 10 bis 30 Gew.-% Pech-basierte Kohlenstofffaser umfaßt, die mindestens 50 Gew.-% graphitischen Kohlenstoff und von 0 bis 30 Gew.-% Graphit enthält.

5. Zusammensetzung nach Anspruch 1, **dadurch gekennzeichnet, daß** die Pech-basierte Kohlenstofffaser, die mindestens 50 Gew.-% graphitischen Kohlenstoff enthält, eine thermische Leitfähigkeit von 400 bis 700 W/mK und eine durchschnittliche Länge von 200 Mikron besitzt.

6. Zusammensetzung nach Anspruch 1, **dadurch gekennzeichnet, daß** sie von 65 Gew.-% bis 75 Gew.-% Polyamid-Imid-Harz, von 5 Gew.-% bis 10 Gew.-% Polytetrafluorethylen und von 10 Gew.-% bis 30 Gew.-% Pech-basierte Kohlenstofffaser, die mindestens 50 Gew.-% graphitischen Kohlenstoff enthält, umfaßt.

7. Zusammensetzung nach Anspruch 1, **dadurch gekennzeichnet, daß** sie weiters ein anorganisches, thermisch stabiles Schichtsilikat mit geringer Härte umfaßt.

8. Zusammensetzung nach Anspruch 7, **dadurch gekennzeichnet, daß** das Schichtsilikat Glimmer ist.

9. Zusammensetzung nach Anspruch 7, **dadurch gekennzeichnet, daß** sie von 65 Gew.-% bis 75 Gew.-% Polyamid-Imid-Harz, von 3 Gew.-% bis 10 Gew.-% Polytetrafluorethylen, von 10 Gew.-% bis 30 Gew.-% Pech-basierte Kohlenstofffaser, die mindestens 50 Gew.-% graphitischen Kohlenstoff enthält, und von 5 Gew.-% bis 10 Gew.-% Glimmer umfaßt.

10. Zusammensetzung nach Anspruch 1, **dadurch gekennzeichnet, daß** das Fluorpolymer Polytetrafluorethylen ist.

11. Verfahren zur Verbesserung der Verschleißeigenschaften einer Spritzgußzusammensetzung, welche **dadurch gekennzeichnet ist, daß** sie ein Polyamid-Imid-Harz und Polytetrafluorethylen umfaßt, welches Verfahren die Schmelzecompoundierung der Zusammensetzung mit mehr als 5 Gew.-% bis 40 Gew.-% Pech-basierter Kohlenstofffaser, die mindestens 50 Gew.-% graphitischen Kohlenstoff enthält, umfaßt.

12. Gegenstand, hergestellt durch Spritzgießen der Zusammensetzung nach Anspruch 1 oder 7.

## Revendications

1. Composition comprenant de 57 % en poids à 90 % en poids de résine de polyamide - imide, de 3 à 10 % en poids de fluoropolymère, et de plus de 5 % en poids à 40 % en poids de fibre de carbone à base de brai contenant au moins 50 % en poids de carbone sous forme de graphite.

2. Composition selon la revendication 1, **caractérisée en ce que** la fibre de carbone à base de brai contient plus de 75 % en poids de carbone sous forme de graphite.

3. Composition selon la revendication 1, **caractérisée en ce que** la fibre de carbone à base de brai contient dans l'ensemble 100 % en poids de carbone sous forme de graphite.

4. Composition selon la revendication 1, **caractérisée en ce qu'**elle comprend de 10 à 30 % en poids de fibre de carbone à base de brai contenant au moins 50 % en poids de carbone sous forme de graphite et de 0 à 30 % en poids de graphite.

5. Composition selon la revendication 1, **caractérisée en ce que** la fibre de carbone à base de brai contenant au moins 50 % en poids de carbone sous forme de graphite a une conductivité thermique de 400 à 700 W/mK et une longueur moyenne de 200 microns.

6. Composition selon la revendication 1, **caractérisée en ce qu'**elle comprend de 65 % en poids à 75 % en poids de résine de polyamide - imide, de 5 % en poids à 10 % en poids de polytétrafluoroéthylène, et de 10 % en poids à 30 % en poids de fibre de carbone à base de brai contenant au moins 50 % en poids de carbone sous forme de graphite.

7. Composition selon la revendication 1, **caractérisée en ce que** qu'elle comprend en outre un silicate en feuille inorganique, de faible dureté, thermiquement stable.

8. Composition selon la revendication 7, **caractérisée en ce que** le silicate en feuille est du mica.

9. Composition selon la revendication 7, **caractérisée en ce qu'**elle comprend de 65 % en poids à 75 % en poids de résine de polyamide - imide, de 3 % en poids à 10 % en poids de polytétrafluoroéthylène, de 10 % en poids à 30 % en poids de fibre de carbone à base de brai contenant au moins 50 % en poids de carbone sous forme de graphite, et de 5 % en poids à 10 % en poids de mica.

10. Composition selon la revendication 1, **caractérisée en ce que** ledit fluoropolymère est du polytétrafluoroéthylène.

11. Procédé permettant d'améliorer les caractéristiques d'usure d'une composition de moulage par injection, **caractérisée en ce qu'**elle comprend une résine de polyamide - imide et du polytétrafluoroéthylène, ledit procédé comprenant le mélange par fusion de ladite composition avec de plus de 5 % en poids à 40 % en poids de fibre de carbone à base de brai contenant au moins 50 % en poids de carbone sous forme de graphite.

12. Article formé au moyen du moulage par injection de la composition selon la revendication 1 ou 7.
